# EUROPÄISCHE PATENTANMELDUNG

(11) **EP 4 474 850 A1**
(43) Veröffentlichungstag der Anmeldung: **11.12.2024**
(21) Anmeldenummer: 23177617.0
(22) Anmeldetag: 06.06.2023
(51) Int. Cl.: G01S 5/02

(54) **VERFAHREN UND SYSTEM ZUR DURCH ZWEITEN KNOTEN UNTERSTÜTZTEN MEHRDEUTIGKEITSENTSCHEIDUNG**

(71) Anmelder: Lambda: 4 Entwicklungen GmbH, 22299 Hamburg (DE)
(72) Erfinder: Reimann, Rönne, 22769 Hamburg (DE)
(74) Vertreter: Raffay & Fleck

(57) **Zusammenfassung**

Die Erfindung betrifft ein Verfahren und System zur Beseitigung der Mehrdeutigkeit in Phasenmessungen oder Phasenbeziehungen (integer ambiguity fixing). Aus GPS ist eine Mehrdeutigkeitssuchfunktion bekannt. Denn die Beseitigung der Phasenmehrdeutigkeiten auf eine ganze Zahl ist zum Erzielen einer hohen Genauigkeit bei GPS, insbesondere bei kurzen Messzeiten, entscheidend. Die Aufgabe der Erfindung ist es somit, die Entscheidung zur Beseitigung der Phasenmehrdeutigkeit zu verbessern. Der Erfinder hat erkannt, dass diese Entscheidung für alle das Signal empfangenen Empfänger (E1, E2) unabhängig von ihrem Ort dieselbe ist und dass diese, insbesondere je nach Empfangsbedingungen, besser oder schlechter zu fällen ist. Dabei lassen sich die Empfangsbedingungen insbesondere an der empfangenen Signalqualität, Amplitude und/oder Leistung bestimmen. Dadurch ist er in der Lage durch Nutzen mehrerer Empfänger und deren Entscheidungen eine bessere Entscheidung zu fällen, die dann für alle Empfänger gilt.

## Beschreibung

Die Erfindung betrifft ein Verfahren und System zur Beseitigung der Mehrdeutigkeit in Phasenmessungen oder Phasenbeziehungen (integer ambiguity fixing). Derartige Verfahren und System sind vielfach bekannt.

So ist aus GPS eine Mehrdeutigkeitssuchfunktion bekannt. Denn die Beseitigung der Phasenmehrdeutigkeiten auf eine ganze Zahl (integer ambiguity fixing) ist zum Erzielen einer hohen Genauigkeit bei GPS, insbesondere bei kurzen Messzeiten, entscheidend. Wichtigste Methoden zur Mehrdeutigkeitsfestsetzung sind die geometrische Methode, die Kombination von Träger und Code sowie die Mehrdeutigkeitssuchfunktionen.

Aber auch bei erdbasierten Verfahren bestehen ähnliche Problematiken. So ist beispielsweise bei funkbasierten Verfahren zur Entfernungsmessung, die phasenbasiert arbeiten und dazu mehrere Signale, insbesondere auf verschiedenen Frequenzen, nutzen bei nicht kohärentem Sender, bei dem also die Phasenbeziehung zwischen zwei Signalen nicht bekannt ist, die Problematik am Empfänger gegeben, insbesondere um die durch die Frequenzänderung bedingte Änderung der Phasenverschiebung durch die Übertragung zu bestimmen. Dies ist insbesondere dann der Fall, wenn basierend auf Signalrundläufen mit mathematischen Methoden Eigenschaften des Funkkanals analysiert werden sollen, insbesondere mit komplexen Zahlen, wie beispielsweise aus der EP 3 564 707 B1 bekannt.

Dabei wird im Stand der Technik immer ein Empfänger verwendet, mittels dessen die Entscheidung getroffen wird. In Bezug auf die Art der Entscheidungsfindung sind verschiedenste Ansätze bekannt, wie aus der EP 3 564 707 B1, WO 2018/052 722 A1, WO 2008/024939 A2, US 6,028,888 A, EP 2 140 285 B1, CN 107171 780 A, CN 101057440 A, CN 112804178 A und CN 113567979 A. Auch sind Maßnahmen bekannt, das Signal selbst zu optimieren, wie aus der US 10,177,904 B2.

Der Erfinder hat erkannt, dass diese Entscheidung für alle das Signal empfangenen Empfänger unabhängig von ihrem Ort, beispielsweise des Reflektors (auch ausgestaltet als Transceiver zum Senden einer Antwort auf ein eingehendes Funksignal) dieselbe ist und dass diese, insbesondere je nach Empfangsbedingungen, besser oder schlechter zu fällen ist. Dabei lassen sich die Empfangsbedingungen insbesondere an der empfangenen Signalqualität, Amplitude und/oder Leistung bestimmen. Dadurch ist er in der Lage durch Nutzen mehrerer Empfänger, Transceiver und/oder Rundlaufstrecken (definiert durch Orte der den Signalrundlauf durchführenden Partner, also Transceiver) und deren Entscheidungen eine bessere Entscheidung zu fällen, die dann für alle Empfänger, Transceiver und/oder Rundlaufstrecken gilt, die auf dem gleichen Ausgangssignal basieren.

Die Aufgabe der Erfindung ist es somit, die Entscheidung zur Beseitigung der Phasenmehrdeutigkeit (integer ambiguity fixing) zu verbessern.

Gelöst wird die Aufgabe insbesondere durch ein Verfahren zur Verbesserung der Entscheidung zur Beseitigung der Phasenmehrdeutig (integer ambiguity fixing) zwischen Signalen (Ausgangssignalen) eines Senders, insbesondere erster Transceiver, wobei eine Anordnung einer Mehrzahl von, mindestens zwei, insbesondere mindestens drei, Knoten, beispielsweise Funkempfängern/Transceivern, verwendet wird, wobei die Knoten jeweils mindestens eine Antenne und jeweils mindestens einen Frequenzgeber, insbesondere PLL, aufweisen und jeweils eingerichtet sind, Funksignale zu empfangen und deren, insbesondere relative, Phasenlage zu bestimmen/und oder mittels Funksignal darauf zu antworten, und insbesondere eingerichtet sind, untereinander und/oder mit einer gemeinsamen Zentraleinheit zu kommunizieren,
wobei die Knoten einen Abstand voneinander, insbesondere von mehr als einer Wellenlänge einer der Frequenzen des Funksignals und/oder mehr als 5 cm und/oder weniger als 10km, insbesondere weniger als 1 km aufweisen,
wobei mittels des Senders mindestens ein Funksignal aufweisend mindestens zwei Signale, abgestrahlt wird und das Funksignal von den, insbesondere allen, Knoten empfangen, und insbesondere jedes der mindestens zwei Signal beantwortet, wird und die mindestens zwei Knoten/die Konten, die das Funksignal empfangen und/oder beantworten, insbesondere alle, jeweils mindestens eine Phasenmessung, insbesondere auch Amplitude und/oder Leistungsmessung, pro Signal vornehmen,
dadurch gekennzeichnet, dass für mindestens zwei Signalrundlaufstrecken und/oder mindestens zwei, insbesondere jeden, Knoten der Mehrzahl von Knoten jeweils eine Entscheidung zur Beseitigung der Phasenmehrdeutig gefällt wird, bevorzugt mindestens zwei, insbesondere alle Knoten eine solche Entscheidung treffen, und eine gemeinsame Entscheidung zur Beseitigung der Phasenmehrdeutig mittels Aggregation der Entscheidungen zur Beseitigung der Phasenmehrdeutig der/mittels der mindestens zwei, insbesondere jedes/r, Knoten/Signalrundlaufstrecken gefällt wird. Eine Signalrundlaufstrecke ist dabei insbesondere nur definiert durch deren Endpunkte, also insbesondere Ort des Sender/erster Transceiver und Ort des Knoten.

Gelöst wird die Aufgabe auch durch ein System bestehend aus einer Mehrzahl von Knoten, wobei die Knoten jeweils mindestens eine Antenne und jeweils mindestens einen Frequenzgeber, insbesondere PLL, aufweisen und jeweils eingerichtet sind, Funksignale zu empfangen und deren Phasenlage zu bestimmen, und insbesondere eingerichtet sind untereinander und/oder mit einer gemeinsamen Zentraleinheit zu kommunizieren,
wobei die Knoten einen Abstand voneinander aufweisen,
wobei die Knoten jeweils eingerichtet sind, mindestens eine Phasenmessung pro Signal vorzunehmen und/oder deren, insbesondere relative, Phasenlage zu bestimmen, dadurch gekennzeichnet, dass das System eingerichtet ist, für mindestens zwei Knoten und/oder Signalrundläufe mittels der Knoten der Mehrzahl von Knoten jeweils eine Entscheidung zur Beseitigung der Phasenmehrdeutig zu fällen und eine gemeinsame Entscheidung zur Beseitigung der Phasenmehrdeutig mittels Aggregation der Entscheidungen zur Beseitigung der Phasenmehrdeutig der/mittels der mindestens zwei Knoten zu fällen.

Gelöst wird die Aufgabe auch durch eine Verwendung mindestens zweier Entscheidungen zur Beseitigung der Phasenmehrdeutig für je einen Funkempfänger/eine Signalrundlaufstrecke, insbesondere (mittels) Knoten/Transceiver, insbesondere bezüglich eines von beiden Funkempfängern empfangenen Funksignals, aufweisend mindestens zwei Signale, zur Fällung einer gemeinsamen Entscheidung zur Beseitigung der Phasenmehrdeutig mittels Aggregation der Entscheidungen zur Beseitigung der Phasenmehrdeutig der/mittels der mindestens zwei Funkempfänger.

Vorteilhafte Ausgestaltungen des Verfahrens gelten entsprechend auch für das System und/oder die Verwendung. Insbesondere ist das System eingerichtet, das erfindungsgemäße Verfahren auszuführen und/oder wird das Verfahren und/oder die Verwendung mittels eines erfindungsgemäßen Systems durchgeführt.

Das Funksignal kann beispielsweise nacheinander zwei Signale, auch mit dazwischen liegender Unterbrechung, mit je einer Frequenz aufweisen. Die Frequenzen können gleich oder insbesondere unterschiedliche sein. Auch bei gleichen Frequenzen kann bei einer Neuansteuerung, insbesondere tunen, des Frequenzgebers, insbesondere der PLL, die Phasenbeziehung zwischen den Signalen unbekannt sein und somit eine Entscheidung zur Beseitigung der Mehrdeutigkeit erforderlich sein. Insbesondere weisen die Frequenzen untereinander einen Abstand von nicht mehr als 100MHz, insbesondere nicht mehr als 10 MHz, und/oder mehr als 0,5 MHz und/oder im Bereich von 0,5 MHz bis 2 MHz und/oder überspannen Sie einen Bereich von mindestens 1 MHz, insbesondere mindestens 2, bevorzugt mindestens 5MHz. Ein/der zeitliche(r) Abstand ist/wird insbesondere so gewählt, dass Sender und Empfänger in dieser Zeit eine quasi Stationäre Anordnung bilden und/oder die durch die Änderung über den zeitlichen Abstand bedingte Änderung der Phasenverschiebung weniger als 30° beträgt, insbesondere bzgl. der mindestens zwei, insbesondere aller, Frequenzen des Funksignals/der Signale. Unter diesen Voraussetzungen lassen sich besonders zuverlässige und genaue Ergebnisse erzielen.

Das Funksignal kann aber auch gleichzeitig Signale unterschiedlicher Frequenzen aufweisen.

Erfindungsgemäß werden somit insbesondere mindestens zwei, insbesondere die Gesamtheit, der Phasenmessungen an den mindestens zwei Signalen von unterschiedlichen Orten verwendet, um Entscheidung zur Beseitigung der Phasenmehrdeutig zu fällen und daraus eine gemeinsame Entscheidung zur Beseitigung der Phasenmehrdeutig zu fällen. Viele System verwenden ohnehin mehrere Knoten, beispielsweise um eine Ortung zu ermöglichen, eine bessere Abdeckung, und/oder Signalweiterleitung zu erreichen und/oder Angriffe zu erkennen. insbesondere in solchen Systemen kann das Verfahren besonders vorteilhaft, da ohne weiteren apparativen Aufwand, realisiert werden. Insbesondere ist es nicht erforderlich, die (relative) Position der oder Entfernung zwischen den Funkempfängern/Knoten zu kennen. Ein besonderer Vorteil der Erfindung liegt auch darin, dass eine Entscheidung oder die gemeinsame Entscheidung mittels nur eines Bits und/oder eine Entscheidung mit einem Indikator für die Güte/Gewichtung mit einer sehr geringen Datenmenge, beispielsweise einem Bit für die Entscheidung und zwei bis sieben, bevorzugt bis fünf, Bit für die Güte und/oder Gewichtung übertragen werden kann/wird und das System bevorzugt dazu eingerichtet ist.

Die Signale werden dabei insbesondere unter Nutzung eines Frequenzgenerators, insbesondere einer PLL, des Senders generiert.

Insbesondere wird die relative Phasenlage der Signale zueinander bestimmt. Mit besonderem Vorteil sind die Knoten/Funkempfänger jeweils so eingerichtet und/oder wird das Verfahren so geführt, dass die Phasenbeziehung zwischen Frequenzsignalen ihres Frequenzgeber bekannt ist. Dabei kann es sich bei den Frequenzsignalen insbesondere um solche unterschiedlicher Frequenz oder solche handeln, zwischen deren Erzeugung der Frequenzgeber ausgeschaltet war und/oder Frequenzsignale anderer Frequenz erzeugt hat. Dies kann auch unterschiedliche Art und Weise realisiert werden. So kann die Phasenbeziehung beispielsweise im Empfänger bestimmt, insbesondere gemessen werden oder kann der Frequenzgenerator kohärent zwischen Frequenzen wechseln.

Die Knoten, die insbesondere als Funkempfänger oder Transceiver ausgestaltet sind, bestimmen die Phasenlage insbesondere unter und/oder gegenüber ihrem Frequenzgenerator, insbesondere PLL. Dabei versuchen insbesondere alle Knoten/Funkempfänger eine Phasenmessung, dies kann jedoch auf Grund der Empfangsbedingungen teilweise nicht oder nur mit großer Ungenauigkeit möglich sein. Darin liegt aber gerade die Stärke der Erfindung, die es ermöglicht, eine zuverlässige Entscheidung zur Beseitigung der Mehrdeutigkeit auch zu treffen, wenn die Phasenmessung an einem oder einigen der Knoten nicht oder nur mit großem Fehler möglich ist. Diese Entscheidung kann dann wiederrum für alle Phasenmessungen, Funkempfänger und/oder Knoten, bezüglich des jeweiligen Signals und/oder Signalpaars verwendet werden.

Besonders deutlich werden die Vorteile der Erfindung, wenn sie im Rahmen der weiteren Verarbeitung und/oder Analyse der Signale, beispielsweise zur Ableitung mindestens einer Eigenschaft des Funkkanals zwischen Sender und mindestens einem Empfänger genutzt werden und/oder wenn aus einem Signalrundlauf vom Sender, der dann insbesondere als (erster) Transceiver ausgestaltet ist, zum Empfänger, der dann insbesondere als (zweiter) Transceiver ausgestaltet ist, und zurück zum Sender, bei dem beispielsweise der Empfänger auf das Signal des Senders antwortet, eine Eigenschaft des Einwegefunkkanals, also vom Sender zum Empfänger oder umgekehrt abgeleitet werden soll und/oder wenn die Summe der Phasenverschiebung des Rundlaufs für die weitere Verarbeitung geteilt, insbesondere halbiert wird und/oder aus der Phasenverschiebung des Rundlaufs und einer weiteren Messung, beispielsweise der empfangenen Amplitude und/oder Leistung, mindestens eine, insbesondere komplexe, Zahl abgeleitet wird, mittels derer bevorzugt mindestens eine Eigenschaft des Einwegfunkanals und/oder Entfernung- und/oder Position, insbesondere relative, der/eines der am Signalrundlauf beteiligten Transceiver ermittelt wird.

Mit besonderen Vorteil erfolgt die Aggregation mittels Wahrscheinlichkeitswerten und/oder Gewichtungen der Entscheidungen zur Beseitigung der Phasenmehrdeutig der mindestens zwei, insbesondere aller, Knoten und/oder durch Mittelung, Auswahl und/oder gewichtete Mittelung, wobei insbesondere Wahrscheinlichkeitswerte und/oder Gewichtungen auf Basis von, insbesondere proportional zu, Empfangsenergie, Leistung, Störabstand, Signal-Rausch-Abstand und/oder Signalqualität der an den Knoten empfangenen Signale bestimmt werden. Dabei können auch Verhältnisse eines oder mehrere dieser Parameter zu solchen vorausgehender Signale verwendet werden. Dabei können auch einzelne Entscheidungen auf Grund sehr geringer Wahrscheinlichkeiten, Gewichtungen und/oder Güten nur sehr geringen oder gar keinen Einfluss auf die gemeinsame Entscheidung haben.

Mit besonderem Vorteil wird das Verfahren für eine Vielzahl von Signalen, insbesondere mindestens 5, insbesondere mindestens 10 und/oder bis 50, insbesondere mit mindestens 5, insbesondere mindestens 10 und/oder bis 50 unterschiedlichen Frequenzen, und/oder innerhalb einer Zeitspanne von bis zu 1 Sekunde und/oder Signale eines Frequenzhoppings durchgeführt und/oder wiederholt.

Bevorzugt wird die gemeinsame Entscheidung zur Beseitigung der Phasenmehrdeutig bei der Nutzung der Phasenmessung der, insbesondere aller, Knoten verwendet. Dies Nutzung kann beispielsweise eine zur Bestimmung einer Entfernung- und/oder Position des Senders, eines oder aller Knoten und/oder Funkempfänger sein, insbesondere relativ zwischen Knoten und einem oder mehreren, insbesondere allen, Knoten/Funkempfängern.

Mit Vorteil werden die Phasenmessung an Signalen mit unterschiedlichen Frequenzen durchgeführt werden.

Insbesondere weisen die Knoten eine feste und/oder bekannte räumliche Beziehung zueinander auf. Dies kann insbesondere vorteilhaft sein, wenn das Verfahren im Rahmen eines Verfahrens zur Positions- und/oder Entfernungsbestimmung eingesetzt wird.

Mit Vorteil weisen die Frequenzgeber der Knoten eine bekannte Phasenbeziehung auf. Dies kann insbesondere vorteilhaft sein, wenn das Verfahren im Rahmen eines Verfahrens zur Positions- und/oder Entfernungsbestimmung eingesetzt wird.

Mit besonderem Vorteil wird das Verfahren im Rahmen eines Verfahrens zur phasenbasierten Entfernungs- und/oder Positionsbestimmung eines Senders relativ zu einem Knoten, insbesondere einer Anordnung der Knoten eingesetzt und/oder werden die Signale zur Entfernungs- und/oder Positionsbestimmung eines Senders relativ zu einem Knoten, insbesondere einer Anordnung der Knoten, genutzt.

Bevorzugt ist der der Frequenzgeber des Senders zwischen zwei Frequenzen und/oder zwei Ansteuerungen nicht kohärent. Dann kann das Verfahren seine Vorteile besonders gut ausspielen.

Vorteilhafterweise sind die Knoten Bestandteil eines Systems, das die Knoten ohnehin für eine andere Aufgabe benötigt, beispielsweise Bestandteil eines Fahrzeugs, insbesondere Autos oder LKWs und/oder eines Zugangsgewährungs- und/oder Verhinderungssystems und/oder -vorrichtung.

Mit Vorteil ist der der Sender ein Zugangsgewährungsmittel, insbesondere Schlüssel, und/oder weist das System einen Sender auf, eingerichtet, mindestens ein Funksignal, aufweisend mindestens zwei Signale, abzustrahlen.

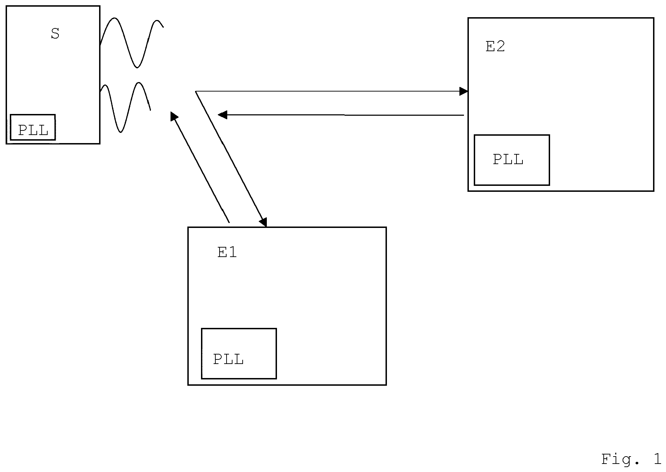

Figur 1 zeigt zur exemplarischen und rein schematischen und nicht beschränkend zur Erläuterung einiger Aspekte eine Illustration eines Senders S und zweier Empfänger E1 und E2. Der Sender sendet unter Nutzung seiner PLL zwei Signale bei unterschiedlichen Frequenzen nacheinander aus, verdeutlicht durch zwei Wellenzüge. Zwischen der Aussendung wird die PLL umgestellt, um die zweite Frequenz zu erzeugen. Dabei ist die Phasenbeziehung zwischen den Signalen nicht bekannt. Bezüglich jedes der Signale wird vom Empfänger E1, der als Transceiver ausgestaltet ist, ein Signalrundlauf durchgeführt und wird vom Empfänger E2, der als Transceiver ausgestaltet ist, ein Signalrundlauf durchgeführt, wobei die Erfindung auch ohne Signalrundläufe implementierbar ist. Dazu sendet jeder der Empfänger E1, E2 je Signal ein Antwortsignal (nur durch einen gemeinsamen Pfeile pro Empfänger verdeutlicht) mit zum Signal jeweils gleicher Frequenz und misst den Phasenversatz zwischen Signal und Antwortsignal. Auch der Sender, ebenfalls als Transceiver ausgestaltet, misst den bei ihm zu beobachtenden Phasenversatz zwischen Signal und Antwortsignal. Daraus kann die durch die Übertragung des Signals und Antwortsignals bedingte Phasenverschiebung des Signalrundlaufs bestimmt werden. Die Phasenverschiebungen könne, insbesondere kann der Unterschied der Phasenverschiebung zwischen den zwei Rundläufen, dann zur Bestimmung der Entfernung genutzt werden. Um diesen aber zu bestimmen, ist es vorteilhaft die Phasenverschiebung für nur eine der Richtungen zu ermitteln, die näherungsweise als die Hälfte der Phasenverschiebung des Signalrundlaufs angenommen werden kann. Bei/nach der Division durch zwei ist aber das Mehrdeutigkeitsproblem (insbesondere on 180° addiert/subtrahier oder das Vorzeichen gewechselt werden soll) zu lösen und ist eine Entscheidung zur Phasenmehrdeutigkeit der geteilten Phasenverschiebung bzgl. des Rundlaufes Sender -> Empfänger E1 -> Sender und/oder des Rundlaufes Sender -> Empfänger E2 - > Sender notwendig. Diese müssen aber nicht beide und/oder nicht unabhängig voneinander getroffen werden, wenn sie beide auf dem gleichen Signal des Senders basieren. So kann eine Entscheidung bzgl. des Rundlaufes Sender -> Empfänger E1 -> Sender. Auch bzgl. des Rundlaufes Sender -> Empfänger E2 -> Sender verwendet werden. Insbesondere bei der Verwendung einer größeren Anzahl, beispielsweise vier, kann eine aus drei Rundläufen vom Sender jeweils über einen der Empfänger zum Sender mit dem gemeinsamen Signal des Senders abgeleitete gemeinsame Entscheidung auch bzgl. des vierten, insbesondere bzgl. aller Rundläufe verwendet werden.

## Patentansprüche

1. Verfahren zur Verbesserung der Entscheidung zur Beseitigung der Phasenmehrdeutig (integer ambiguity fixing) für/zwischen Signale(n) eines Senders (S) und/oder Signalrundläufe basierend auf Signalen eines Senders (S), wobei eine Anordnung einer Mehrzahl von Knoten (E1, E2) verwendet wird, wobei die Knoten jeweils mindestens eine Antenne und jeweils mindestens einen Frequenzgeber, insbesondere PLL, aufweisen und jeweils eingerichtet sind, Funksignale zu empfangen, insbesondere auch zu beantworten, und deren, insbesondere relative, Phasenlage zu bestimmen, und eingerichtet sind, untereinander und/oder mit einer gemeinsamen Zentraleinheit zu kommunizieren,
wobei die Knoten einen Abstand voneinander aufweisen,
wobei mittels des Senders mindestens ein Funksignal aufweisend mindestens zwei Signale, abgestrahlt wird und das Funksignal von den Knoten empfangen wird und die Knoten jeweils mindestens eine Phasenmessung pro Signal vornehmen, insbesondere diese beantworten,
**dadurch gekennzeichnet,**
**dass** für mindestens zwei Knoten und/oder mindestens zwei Signalrundläufe mittels mindestens zwei Knote der Mehrzahl von Knoten jeweils eine Entscheidung zur Beseitigung der Phasenmehrdeutig gefällt wird und eine gemeinsame Entscheidung zur Beseitigung der Phasenmehrdeutig mittels Aggregation der Entscheidungen zur Beseitigung der Phasenmehrdeutig der/mittels der mindestens zwei Knoten gefällt wird.

2. Verfahren nach Anspruch 1, wobei die Aggregation mittels Wahrscheinlichkeitswerten und/oder Gewichtungen der Entscheidungen zur Beseitigung der Phasenmehrdeutig der/mittels der mindestens zwei Knoten und/oder durch Mittelung, Auswahl und/oder gewichtete Mittelung erfolgt, wobei insbesondere Wahrscheinlichkeitswerte und/oder Gewichtungen auf Basis von Empfangsenergie, Leistung, Störabstand und/oder Signalqualität der an den Knoten empfangenen Signale bestimmt werden.

3. Verfahren nach einem der vorstehenden Ansprüche, wobei die Knoten eingerichtet sind, dass die Phasenbeziehung zwischen Frequenzsignalen des Frequenzgeber bekannt ist.

4. Verfahren nach einem der vorstehenden Ansprüche, wobei die gemeinsame Entscheidung zur Beseitigung der Phasenmehrdeutig bei der Nutzung der Phasenmessung der Knoten verwendet wird.

5. Verfahren nach einem der vorstehenden Ansprüche, wobei die mindestens zwei Signale zeitversetzt und/oder mit unterschiedlichen Frequenzen gesendet werden.

6. Verfahren nach einem der vorstehenden Ansprüche, wobei die Phasenmessung an Signalen mit unterschiedlichen Frequenzen durchgeführt werden.

7. Verfahren nach einem der vorstehenden Ansprüche, wobei die Knoten eine feste und/oder bekannte räumliche Beziehung zueinander aufweisen und/oder ihre PLLs eine bekannte Phasenbeziehung aufweisen.

8. Verfahren nach einem der vorstehenden Ansprüche, wobei das Verfahren im Rahmen eines Verfahrens zur phasenbasierten Entfernungs- und/oder Positionsbestimmung eines Senders relativ zu einem Knoten, insbesondere einer Anordnung der Knoten, eingesetzt wird und/oder die Signale zur Entfernungs- und/oder Positionsbestimmung eines Senders relativ zu einem Knoten, insbesondere einer Anordnung der Knoten, und/oder zur Analyse basierend auf komplexen Zahlen und/oder der Ableitung einer Eigenschaft des Einwegekanals aus einem Signalrundlauf genutzt werden.

9. Verfahren nach einem der vorstehenden Ansprüche, wobei der Frequenzgeber des Senders zwischen zwei Frequenzen und/oder zwei Ansteuerungen nicht kohärent ist.

10. Verfahren nach einem der vorstehenden Ansprüche, wobei die Knoten Bestandteil eines Fahrzeugs, insbesondere Autos oder LKWs und/oder eines Zugangsgewährungs- und/oder Verhinderungssystems und/oder -vorrichtung sind.

11. Verfahren nach einem der vorstehenden Ansprüche, wobei der Sender ein Zugangsgewährungsmittel, insbesondere Schlüssel, ist.

12. System bestehend aus einer Mehrzahl von Knoten, wobei die Knoten jeweils mindestens eine Antenne und jeweils mindestens einen Frequenzgeber, insbesondere PLL, aufweisen und jeweils eingerichtet sind, Funksignale zu empfangen und deren Phasenlage zu bestimmen, und eingerichtet sind, untereinander und/oder mit einer gemeinsamen Zentraleinheit zu kommunizieren,
wobei die Knoten einen Abstand voneinander aufweisen,
wobei die Knoten jeweils eingerichtet sind, mindestens eine Phasenmessung pro Signal vorzunehmen und/oder deren relative Phasenlage zu bestimmen, **dadurch gekennzeichnet, dass** das System eingerichtet ist, für mindestens zwei Knoten der Mehrzahl von Knoten jeweils eine Entscheidung zur Beseitigung der Phasenmehrdeutig zu fällen und eine gemeinsame Entscheidung zur Beseitigung der Phasenmehrdeutig mittels Aggregation der Entscheidungen zur Beseitigung der Phasenmehrdeutig der/mittels der mindestens zwei Knoten zu fällen.

13. System nach Anspruch 12, zusätzlich aufweisend einen Sender eingerichtet, mindestens ein Funksignal aufweisend mindestens zwei Signale, abzustrahlen.

14. Verwendung mindestens zweier Entscheidungen zur Beseitigung der Phasenmehrdeutig für je einen Funkempfänger bezüglich eines von beiden Funkempfängern empfangenen Funksignals, aufweisend mindestens zwei Signale, zur Fällung einer gemeinsamen Entscheidung zur Beseitigung der Phasenmehrdeutig mittels Aggregation der Entscheidungen zur Beseitigung der Phasenmehrdeutig der mindestens zwei Funkempfänger.

## Geänderte Patentansprüche

### Geänderte Patentansprüche gemäss Regel 137(2) EPÜ.

1. Verfahren zur Verbesserung der Entscheidung zur Beseitigung der Phasenmehrdeutig (integer ambiguity fixing) für/zwischen Signale(n) eines Senders (S) und/oder Signalrundläufe basierend auf Signalen eines Senders (S), wobei eine Anordnung einer Mehrzahl von Knoten (E1, E2) verwendet wird, wobei die Knoten jeweils mindestens eine Antenne und jeweils mindestens einen Frequenzgeber, insbesondere PLL, aufweisen und jeweils eingerichtet sind, Funksignale zu empfangen, insbesondere auch zu beantworten, und deren, insbesondere relative, Phasenlage zu bestimmen, und eingerichtet sind, untereinander und/oder mit einer gemeinsamen Zentraleinheit zu kommunizieren,
wobei die Knoten einen Abstand voneinander aufweisen,
wobei mittels des Senders mindestens ein Funksignal aufweisend mindestens zwei Signale, abgestrahlt wird und das Funksignal von den Knoten empfangen wird und die Knoten jeweils mindestens eine Phasenmessung pro Signal vornehmen, insbesondere diese beantworten,
wobei für mindestens zwei Knoten und/oder mindestens zwei Signalrundläufe mittels mindestens zwei Knoten der Mehrzahl von Knoten jeweils eine Entscheidung zur Beseitigung der Phasenmehrdeutig gefällt wird **dadurch gekennzeichnet,**
**dass** eine gemeinsame Entscheidung zur Beseitigung der Phasenmehrdeutig mittels Aggregation der Entscheidungen zur Beseitigung der Phasenmehrdeutig der/mittels der mindestens zwei Knoten gefällt wird.

2. Verfahren nach Anspruch 1, wobei die Aggregation mittels Wahrscheinlichkeitswerten und/oder Gewichtungen der Entscheidungen zur Beseitigung der Phasenmehrdeutig der/mittels der mindestens zwei Knoten und/oder durch Mittelung, Auswahl und/oder gewichtete Mittelung erfolgt, wobei insbesondere Wahrscheinlichkeitswerte und/oder Gewichtungen auf Basis von Empfangsenergie, Leistung, Störabstand und/oder Signalqualität der an den Knoten empfangenen Signale bestimmt werden.

3. Verfahren nach einem der vorstehenden Ansprüche, wobei die Knoten eingerichtet sind, dass die Phasenbeziehung zwischen Frequenzsignalen des Frequenzgeber bekannt ist.

4. Verfahren nach einem der vorstehenden Ansprüche, wobei die gemeinsame Entscheidung zur Beseitigung der Phasenmehrdeutig bei der Nutzung der Phasenmessung der Knoten verwendet wird.

5. Verfahren nach einem der vorstehenden Ansprüche, wobei die mindestens zwei Signale zeitversetzt und/oder mit unterschiedlichen Frequenzen gesendet werden.

6. Verfahren nach einem der vorstehenden Ansprüche, wobei die Phasenmessung an Signalen mit unterschiedlichen Frequenzen durchgeführt werden.

7. Verfahren nach einem der vorstehenden Ansprüche, wobei die Knoten eine feste und/oder bekannte räumliche Beziehung zueinander aufweisen und/oder ihre PLLs eine bekannte Phasenbeziehung aufweisen.

8. Verfahren nach einem der vorstehenden Ansprüche, wobei das Verfahren im Rahmen eines Verfahrens zur phasenbasierten Entfernungs- und/oder Positionsbestimmung eines Senders relativ zu einem Knoten, insbesondere einer Anordnung der Knoten, eingesetzt wird und/oder die Signale zur Entfernungs- und/oder Positionsbestimmung eines Senders relativ zu einem Knoten, insbesondere einer Anordnung der Knoten, und/oder zur Analyse basierend auf komplexen Zahlen und/oder der Ableitung einer Eigenschaft des Einwegekanals aus einem Signalrundlauf genutzt werden.

9. Verfahren nach einem der vorstehenden Ansprüche, wobei der Frequenzgeber des Senders zwischen zwei Frequenzen und/oder zwei Ansteuerungen nicht kohärent ist.

10. Verfahren nach einem der vorstehenden Ansprüche, wobei die Knoten Bestandteil eines Fahrzeugs, insbesondere Autos oder LKWs und/oder eines Zugangsgewährungs- und/oder Verhinderungssystems und/oder -vorrichtung sind.

11. Verfahren nach einem der vorstehenden Ansprüche, wobei der Sender ein Zugangsgewährungsmittel, insbesondere Schlüssel, ist.

12. System bestehend aus einer Mehrzahl von Knoten, wobei die Knoten jeweils mindestens eine Antenne und jeweils mindestens einen Frequenzgeber, insbesondere PLL, aufweisen und jeweils eingerichtet sind, Funksignale zu empfangen und deren Phasenlage zu bestimmen, und eingerichtet sind, untereinander und/oder mit einer gemeinsamen Zentraleinheit zu kommunizieren,
wobei die Knoten einen Abstand voneinander aufweisen,
wobei die Knoten jeweils eingerichtet sind, mindestens eine Phasenmessung pro Signal vorzunehmen und/oder deren relative Phasenlage zu bestimmen, **dadurch gekennzeichnet, dass** das System eingerichtet ist, für mindestens zwei Knoten der Mehrzahl von Knoten jeweils eine Entscheidung zur Beseitigung der Phasenmehrdeutig zu fällen und eine gemeinsame Entscheidung zur Beseitigung der Phasenmehrdeutig mittels Aggregation der Entscheidungen zur Beseitigung der Phasenmehrdeutig der/mittels der mindestens zwei Knoten zu fällen.

13. System nach Anspruch 12, zusätzlich aufweisend einen Sender eingerichtet, mindestens ein Funksignal aufweisend mindestens zwei Signale, abzustrahlen.

14. Verwendung mindestens zweier Entscheidungen zur Beseitigung der Phasenmehrdeutig für je einen Funkempfänger bezüglich eines von beiden Funkempfängern empfangenen Funksignals, aufweisend mindestens zwei Signale, zur Fällung einer gemeinsamen Entscheidung zur Beseitigung der Phasenmehrdeutig mittels Aggregation der Entscheidungen zur Beseitigung der Phasenmehrdeutig der mindestens zwei Funkempfänger.
